(19) Europäisches Patentamt
European Patent Office
Office européen des brevets

(11) **EP 2 974 156 B1**

(12) **EUROPÄISCHE PATENTSCHRIFT**

(45) Veröffentlichungstag und Bekanntmachung des Hinweises auf die Patenterteilung:
**03.05.2017 Patentblatt 2017/18**

(21) Anmeldenummer: **14719190.2**

(22) Anmeldetag: **13.03.2014**

(51) Int Cl.:
*H04L 12/40* *(2006.01)*    *H04L 12/403* *(2006.01)*
*H04L 12/44* *(2006.01)*

(86) Internationale Anmeldenummer:
**PCT/AT2014/050062**

(87) Internationale Veröffentlichungsnummer:
**WO 2014/138765 (18.09.2014 Gazette 2014/38)**

(54) **VORRICHTUNG UND VERFAHREN ZUR AUTONOMEN STEUERUNG VON KRAFTFAHRZEUGEN**

DEVICE AND METHOD FOR THE AUTONOMOUS CONTROL OF MOTOR VEHICLES

PROCEDE ET DISPOSITIF DE COMMANDE AUTONOME DE VEHICULES A MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.03.2013 AT 1992013**

(43) Veröffentlichungstag der Anmeldung:
**20.01.2016 Patentblatt 2016/03**

(73) Patentinhaber: **FTS Computertechnik GmbH**
**1040 Wien (AT)**

(72) Erfinder: **KOPETZ, Hermann**
**A-2500 Baden (AT)**

(74) Vertreter: **Patentanwaltskanzlei**
**Matschnig & Forsthuber OG**
**Biberstraße 22**
**Postfach 36**
**1010 Wien (AT)**

(56) Entgegenhaltungen:
**EP-A1- 2 073 448      EP-A2- 2 209 241**

- **ALENA R L ET AL: "Communications for Integrated Modular Avionics", AEROSPACE CONFERENCE, 2007 IEEE, IEEE, PISCATAWAY, NJ, USA, 3. März 2007 (2007-03-03), Seiten 1-18, XP031214239, ISBN: 978-1-4244-0524-4**

**Beschreibung**

Die Erfindung betrifft eine Vorrichtung zur Steuerung der Bremsen und/oder Lenkung und/ oder Beschleunigung in einem Kraftfahrzeug.

Weiters betrifft die Erfindung ein Verfahren zur Steuerung der Bremsen und/ oder Lenkung und/ oder Beschleunigung in einem Kraftfahrzeug mit einer solchen Vorrichtung.

Die vorliegende Erfindung liegt im Bereich der Kraftfahrzeugelektronik. Im Juni 2012 hat die NCAP *(European New Car Assessment Program)* Organisation eine Roadmap [4] veröffentlicht, aus der hervorgeht, dass im Jahr 2016 *Autonomous Emergency Braking* (AEB) Systeme in neuen Kraftfahrzeugen auf breiter Front eingeführt werden sollen. In weiterer Folge wird erwartet, dass elektronische Systeme zum autonomen Fahren zuerst im Markt für *Premium Fahrzeuge* und später im *Massenmarkt* zum Einsatz kommen werden.

Aus technisch/kommerzieller Sicht ist es eine große Herausforderung, diese elektronischen Systeme, deren Funktionalität in Prototypen bereits demonstriert werden konnte [5], so zu gestalten, dass die geforderte Funktionalität und Zuverlässigkeit mit vertretbaren Kosten erreicht werden können. Neben den einmaligen Entwicklungskosten sind im Massenmarkt die wiederkehrenden Produktionskosten der Computer Hardware und die Wartungskosten von besonderer Bedeutung.

Das elektronische System zur autonomen Steuerung von Fahrzeugen besteht typischerweise aus den folgenden Komponenten:

1. Einer Anzahl von diversitären Sensorkomponenten (Kamera, Radar, Laser, Ultraschall, etc.) zur Beobachtung des Fahrwegs und der Umgebung des Fahrzeugs.

2. Einer meist redundant ausgeführten Sensorfusionskomponente, die die Sensordaten verarbeitet, ein rechnerinternes dreidimensionales Modell der Umgebung erstellt und die Stellwerte für die Aktuatoren ermittelt.

3. Einer Mensch-Maschine-Interface Komponente, die die Stellwerte vom Fahrer entgegen nimmt und an eine intelligente Aktuatorensteuerungs-Komponente (AST) weiterleitet.

4. Einer Monitor Komponente, die den Fahrer beobachtet, um die Aufmerksamkeit des Fahrers festzustellen.

5. Einer intelligenten Aktuatorensteuerungs-Komponente (AST), die die Stellwerte von der Sensorfusionskomponente und der Mensch-Maschinen-Interface Komponente übernimmt und entscheidet, wer die Kontrolle über das Fahrzeug hat und welche Stellwerte an die physikalischen Aktuatoren (Bremse, Lenkung, Motor) im Fahrzeug weitergeleitet werden sollen.

Entsprechend dem Stand der Technik werden diese Komponenten *adhoc* über dezidierte Daten- und Signalleitungen oder unter Verwendung von relativ langsamen Bussystemen verbunden (z.B. CAN Bus oder FlexRay).

Es ist eine Aufgabe der Erfindung, eine solche Vorrichtung bzw. eine solches System, insbesondere eine solche fehlertolerante Vorrichtung bzw. ein solches fehlertolerantes System zur Steuerung der Bremsen und/oder der Lenkung und/oder der Beschleunigung eines Fahrzeugs wesentlich zu verbessern.

Diese Aufgabe wird mit einer Vorrichtung nach Anspruch 1 sowie einem dazugehörigen Verfahren nach Anspruch 10 gelöst. Erfindungsgemäß umfasst die Vorrichtung eine Anzahl von unterschiedlichen Sensorkomponenten, zwei *diversitäre* Sensorfusionskomponenten, eine Menschmaschine-Interface-Komponente und eine, vorzugsweise intelligente, Aktuatoren-Steuerungs-Komponente wobei jede dieser Komponenten eine *Fault-Containment Unit* darstellt und über ein TTEthernet Kommunikationsinterface verfügt, und wobei alle Komponente an eine *zentrale TTEthernet-Nachrichtenverteilereinheit* angeschlossen sind, und wobei die Komponenten *ausschließlich* unter Verwendung von *standardisierten Ethernet Nachrichten* miteinander kommunizieren, und wobei an die *TTEthernet-Nachrichtenverteilereinheit* eine *Diagnoseeinheit* zur *zeitrichtigen* Beobachtung der vermittelten Nachrichten angeschlossen werden kann.

Durch die Einführung einer zentralen TTEthernet Nachrichtenverteilereinheit kann eine bestehende Vorrichtung wesentlich verbessert werden.

Außerdem ist jede der Komponenten als autonome *Fault-Containment Unit (FCU)* ausgebildet und mit einer TTEthernet Nachrichtenschnittstelle ausgestattet, so dass die Kommunikation zwischen den Komponenten über das standardisierte Hochleistungs-Echtzeitkommunikationssystem TTEthernet [1] mit einer Datenrate von 1 Gb/sec. ablaufen kann.

Bevorzugte Ausführungsformen der erfindungsgemäßen Vorrichtung und des erfindungsgemäßen Verfahrens, welche für sich alleine oder in beliebiger Kombination miteinander realisiert sein können, sind im Folgenden beschrieben:

- alle Komponenten sind auf einer Platine angeordnet und die Datenleitungen zwischen den Komponenten und der *zentralen Nachrichtenverteilereinheit* sind als Leiterbahnen auf der Platine ausgeführt;

- alle Komponenten, mit Ausnahme der Sensorkomponenten, auf einer Platine angeordnet und die Datenleitungen zwischen den Komponenten, insbesondere den Komponenten auf der Platine und der *zentralen Nachrichtenverteilereinheit* als Leiterbahnen ausgeführt sind;

- die zentrale Nachrichtenverteilereinheit und alle Datenleitungen zur zentralen Nachrichtenverteilereinheit sind *redundant* ausgelegt;

- die Menschmaschine-Interface-Komponente und die intelligente Aktuatoren-Steuerungs-Komponente sowie die Datenleitung zwischen der Aktuatoren-Steuerungs-Komponente und den Aktuatoren sind redundant ausgelegt;

- die Vorrichtung verfügt über zwei unabhängige Stromquellen, wobei jeweils eine erste von zwei redundanten Komponenten von der ersten Stromquelle versorgt wird und jeweils die zweite Komponente der beiden redundanten Komponenten von der zweiten Stromquelle versorgt wird;

- von besonderem Vorteil ist, wenn die beiden redundanten Sensorfusionskomponenten diversitär ausgeführt sind. Dadurch kann die Wahrscheinlichkeit für die gleichzeitige Aktivierung von Entwurfsfehlern reduziert werden. Die redundanten Sensorfusionskomponenten erledigen dieselben Aufgaben, wobei die Software der beiden redundanten Komponenten unterschiedlich ist. Die Hardware kann unterschiedlich sein, muss aber nicht unterschiedlich sein.

- die Sensorkomponenten, zwei Sensorfusionskomponenten, die Monitorkomponente, die Mensch-Maschine-Interface Komponente und die, vorzugsweise intelligente, Aktuatoren-Steuerungs-Komponente ausschließlich mittels *standardisierter TTEthernet Nachrichten* über eine *Nachrichtenverteilereinheit* kommunizieren, wobei die *Nachrichtenverteilereinheit* dazu eingerichtet ist, eine Teilmenge dieser TTEthernet Nachrichten zu kopieren und an eine Diagnoseeinheit zu senden, und wobei die Diagnoseeinheit dazu eingerichtet ist, diese kopierten Nachrichten zu analysieren und zu speichern.

Bei dem erfindungsgemäßen Verfahren zur Steuerung der Bremsen und/oder Lenkung und/ oder Beschleunigung in einem Kraftfahrzeug mit einer oben beschriebenen Vorrichtung ist es insbesondere von Vorteil, wenn eine Anzahl von Sensorkomponenten, zwei Sensorfusionskomponenten, eine Monitorkomponente, eine Mensch-Maschine Interface Komponente und eine intelligente Aktuatoren-Steuerungs-Komponente ausschließlich mittels *standardisierter TTEthernet Nachrichten über ein Nachrichtenverteilereinheit* kommunizieren, wobei die *Nachrichtenverteilereinheit* eine Teilmenge dieser TTEthernet Nachrichten kopiert und an eine Diagnoseeinheit sendet, und wobei die Diagnoseeinheit diese kopierten Nachrichten analysiert und speichert.

Außerdem kann es bei dem Verfahren von Vorteil sein, wenn die Diagnoseeinheit Nachrichten produziert, die das Verhalten jeder Sensorkomponente, jeder der beiden Sensorfusionskomponenten, der Monitorkomponente und der Mensch-Maschine Interface Komponente im Werte- und Zeitbereich simulieren.

Die modulare Anordnung der elektronischen Komponenten um das zentrale TTEthernet Echtzeitkommunikationssystem bringt folgende Vorteile:

➢ Die Anzahl der physischen Datenleitungen wird reduziert, was zu einer Verbesserung der Hardwarezuverlässigkeit führt.

➢ Jede der beiden redundanten Sensorfusionskomponenten hat Zugriff auf die Daten aller Sensoren.

➢ Die zentrale Nachrichtenverteilereinheit kann ausgewählte Nachrichten kopieren und an eine unabhängige Diagnoseeinheit senden, die diese Nachrichten analysiert und speichert. Damit wird die zeitrichtige Beobachtbarkeit der Resultate jeder ausgewählten FCUs möglich, was das Testen, die Fehlersuche und Wartung vereinfacht.

➢ Die Diagnoseeinheit kann das Verhalten jeder FCU in Echtzeit simulieren.

➢ Der Anschluss weiterer Sensoren wird wesentlich erleichtert, was zu einer signifikanten Erhöhung der Flexibilität der Elektronikarchitektur führt.

➢ Das präzise Zeitraster des TTEthernet Kommunikationssystems unterstützt die systemweite Analyse der Kausalität von Ereignisfolgen.

➢ Die Einführung von gezielter Redundanz wird vereinfacht.

Im Folgenden ist die Erfindung an Hand der Zeichnung näher erörtert. In dieser zeigt

Fig. 1 einen Überblick über die Architektur einer beispielhaften Vorrichtung,

Fig. 2 wie die Zuverlässigkeit durch die Einführung von gezielter Redundanz verbessert werden kann.

Fig. 3 die Struktur eines Steuerungssystem, an Hand dessen die Ermittlung des *Kritikalitätsindex KI* und des *Engagement-Index EI* erörtert ist, und

Fig. 4 die Struktur eines redundanten Steuerungssystems.

Das folgende konkrete Beispiel zeigt eine der vielen möglichen Realisierungen des Aufbaus einer erfindungsgemäßen Vorrichtung.

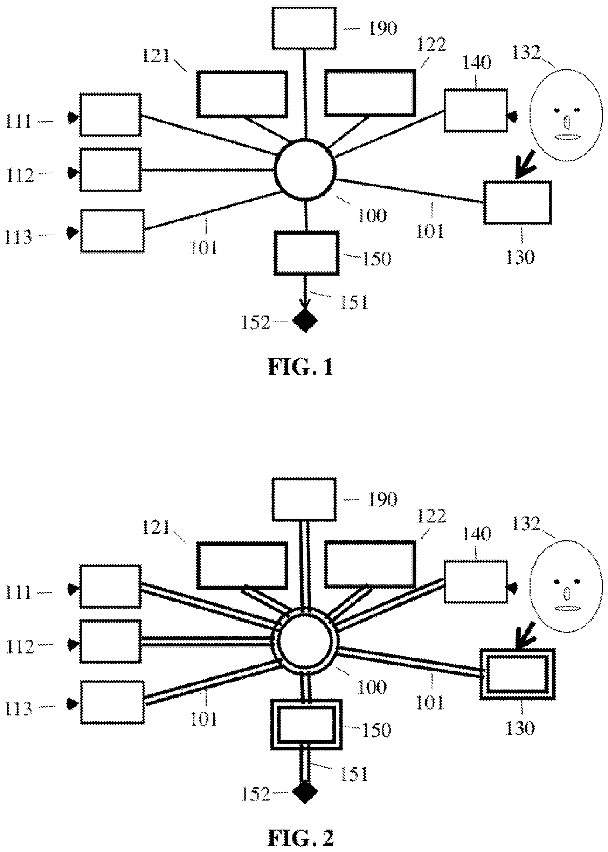

Fig. 1 zeigt in der Bildmitte eine zentrale TTEthernet Nachrichtenverteilereinheit **100**, um die die notwendigen Komponenten eines Steuerungssystems angeordnet sind. Jede der Komponenten verfügt über ein TTEthernet Kommunikationsinterface [1]. Auf den Datenleitungen **101** zwischen den Komponenten und der Nachrichtenverteilereinheit **100** werden ausschließlich Ethernet Nachrichten transportiert.

Erfindungsgemäß muss jede Komponente eine Fault-Containment Unit (FCU) bilden. Unter einer FCU wird ein abgekapseltes Sensor/Hardware/Software Subsystem verstanden, wobei die unmittelbaren Auswirkungen eines Fehlers dieses Subsystems (gleichgültig ob es sich um einen Hardware- oder Software- oder Sensorfehler handelt) auf dieses Subsystem eingegrenzt sind [6, S.136].

In der vorgeschlagenen Architektur kann sich daher ein Fehler mittelbar nur über eine fehlerhafte Nachricht von einer Komponente zu einer anderen Komponente fortpflanzen. Die Nachrichtenverteilereinheit **100** kann parametrisiert werden, so dass sie eine festgelegte Nachrichtenklasse der von ihr vermittelten Nachrichten kopiert und an eine Diagnoseeinheit **190** vorzugsweise *zeitrichtig* sendet. Die *Zeitrichtigkeit* der Nachrichten ist von besonderem Vorteil, da sie eine Voraussetzung für eine *kausale Analyse* von Ereignisfolgen darstellt. Es ist somit möglich, die Ergebnisse jeder FCU auch an die Diagnoseeinheit zur Überprüfung zu senden, so dass die Diagnoseeinheit **190** eine fehlerhafte Komponente auf der Basis der von ihr produzierten fehlerhaften Nachrichten identifizieren kann.

Es besteht auch die Möglichkeit, dass die Diagnoseeinheit **190** das Verhalten jeder anderen Komponente durch die Generierung der entsprechenden Nachrichtenfolgen dieser Komponente simuliert, d.h., die Diagnoseeinheit **190** kann das Verhalten jeder Sensorkomponente, jeder der beiden Sensorfusionskomponenten, der Monitorkomponente und der Menschmaschine Interface Komponente im Werte- und Zeitbereich simulieren.

Auf der linken Seite der Fig. 1 sind beispielhaft drei bildgebende Sensoren/Sensorkomponenten **111**, **112**, **113** (z.B. eine Kamera **111**, ein Radar Sensor **112** und ein Laser Sensor **113**) angeführt. Die Bilderkennung erfolgt üblicherweise in zwei Schritten. In einem ersten Schritt werden signifikante Merkmale (Linien, Schatten, Winkel) ermittelt und in einem zweiten Schritt werden diese Merkmale zusammengefügt, um Objekte erkennen zu können. Um den Datenanfall an der Nachrichtenschnittstelle **101** zu reduzieren, wird vorgeschlagen, den ersten Schritt der Bilderkennung-die *Erkennung von signifikanten Merkmalen* in der entsprechenden Sensorkomponente durchzuführen und diese Merkmale mittels TTEthernet Nachrichten an die diversitär redundanten Sensor-Fusions-Komponenten **121** und **122** zu senden. Die Sensor-Fusions-Komponenten **121** und **122** sind diversitär ausgelegt, um die Wahrscheinlichkeit für die gleichzeitige Aktivierung von Entwurfsfehlern zu reduzieren.

Die Sensor-Fusions-Komponente **121** empfängt die von allen Sensorkomponenten über die Nachrichtenverteilereinheit **100** gelieferten Daten, um *ein internes dreidimensionales Modell* der Umgebung des Fahrzeugs aufzubauen. In diesem Modell sind alle Objekte, die von den Sensoren erfasst wurden, räumlich dargestellt und klassifiziert (z.B. dahingehend, ob es sich um ein Hindernis oder einen Schatten handelt). Wenn im vorgesehenen Fahrweg ein Hindernis erkannt wurde, so werden entsprechende Stellwerte (z.B. Bremsen oder Lenken) an eine Aktuatorsteuerung (AST) **150**. ausgegeben. Die Sensor-Fusions-Komponente **121** kann auch einen Kritikalitätsindex KI des gegenwärtigen Szenarios ermitteln [2].

Die Sensor-Fusions-Komponente **122** arbeitet parallel zur Sensor-Fusions-Komponente **121**, aber mit unterschiedlicher Software. In [3] ist ein Verfahren offengelegt, wie die beiden von der Sensorfusionskomponente **121** und der Sensorfusionskomponente **122** ermittelten Stellwerte fusioniert werden können, im Falle dass ein Softwarefehler auftritt ist.

Die Monitorkomponente **140** beobachtet den Fahrer **132** und ermittelt einen *Engagement-Index EI* des Fahrers, wie in [2] offengelegt.

Eine Mensch-Maschinen-Schnittstellenkomponente **130** nimmt den Wunsch des Fahrers entgegen und sendet zyklisch TTEthernet Nachrichten mit den Stellwerten des Fahrers an die (vorzugsweise intelligente) AST **150**. Die AST **150** kann auf der Basis eines *Kritikalitätsindex KI* von der Sensor Fusionskomponente **121** und des *Engagement-Index EI* von der Monitorkomponente **140** entscheiden, welche Stellwerte über die Datenleitung **151** an die Aktuatoren **152** im Fahrzeug (Bremse, Lenkung, Motor) ausgegeben werden (siehe [2]).

Fig. 2 zeigt die Elektronikarchitektur von Fig. 1, wobei ausgewählte Komponenten und Datenleitungen redundant ausgeführt sind. Es das Ziel von Fig. 2, jeden kritischen Einzelfehler, der zu einem Ausfall des Gesamtsystems führen könnte, zu tolerieren. Um dieses Ziel zu erreichen, müssen die zentrale Nachrichtenverteilereinheit **100** und alle Datenleitungen **101**, die zu der Nachrichtenverteilereinheit führen, redundant ausgeführt werden. Zusätzlich müssen die Mensch-Maschinen-Schnittstellenkomponente **130** und die AST **150** sowie die Datenleitung **151** von der AST zu den physischen Aktuatoren redundant ausgeführt werden. Die Sensorkomponenten **111**, **112**, und **113** sind nicht redundant auszuführen, da die Gesamtheit dieser Sensoren hochredundante Daten über die Umgebung des Fahrzeugs liefern und daher der Ausfall eines Sensors toleriert werden kann. Die Sensorfusionskomponenten **121** und **122** sind bereits redundant. Ein Ausfall der Monitorkomponente lässt sich durch die AST **150** teilweise dadurch kompensieren, dass die AST **150** aus den vom Fahrer vorgegebenen Stellwerten den *Engagement-Index EI* des Fahrers ableitet [2].

Um die Folgen eines Fehlers in der Stromversorgung tolerieren zu können, muss das redundante elektronische System von zwei unabhängigen Stromquellen versorgt, werden, wobei die *erste Instanz* jeder redundanten Komponente von der *ersten* Stromquelle und wo die zweite *Instanz jeder* redundanten Komponente von der *zweiten* Stromquelle versorgt wird.

Die vorliegende Erfindung liegt im Bereich der Kraftfahrzeugelektronik. Sie beschreibt eine netzwerkbasierte Architektur eines fehlertoleranten Steuerungssystems zur autonomen Steuerung der Bremsen und/oder der Lenkung und/oder der Beschleunigung des Fahrzeugs. Es wird vorgeschlagen, alle Sensor- und Verarbeitungskomponenten als autonome *Fault-Containment Units (FCU)* auszubilden und mit einer TTEthernet Nachrichtenschnittstelle auszustatten, so dass die gesamte Kommunikation zwischen den Komponenten über eine Nachrichtenverteilereinheit des standardisierten Hochleistungs-Echtzeit-kommunikationssystems TTEthernet ablaufen kann. Diese netzwerkbasierte Architektur erhöht die Zuverlässigkeit, die Wartbarkeit und die Flexibilität und erleichtert die Inbetriebnahme der Elektronik.

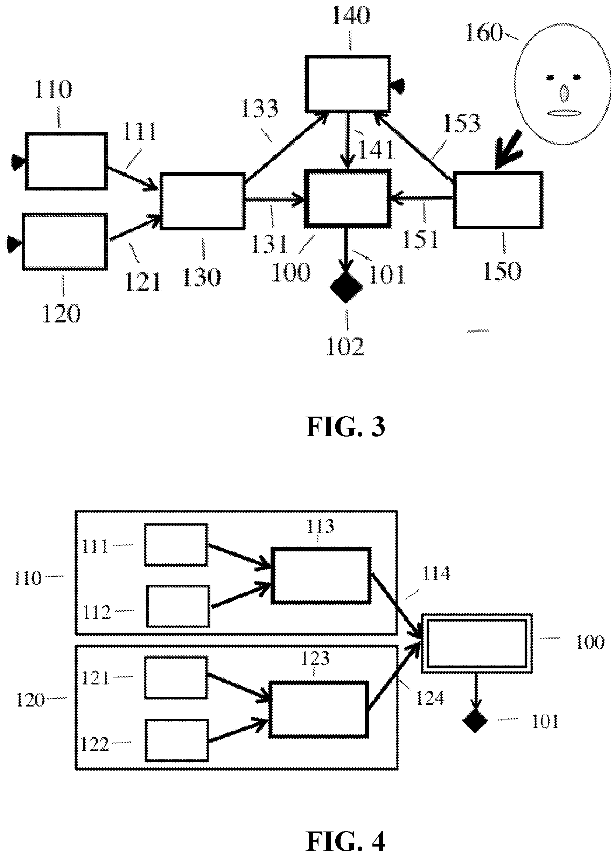

Im Folgenden ist noch eine bevorzugte Ermittlung des *Kritikalitätsindex KI* und des *Engagement-Index EI* wie in [2] beschrieben erörtert. Es wird angemerkt, dass die im Folgenden zu Figur 3 verwendeten Bezugzeichen teilweise identisch zu jenen aus Figur 1 und 2 sind, diese aber nicht unbedingt dieselben Elemente bezeichnen wie jene in Figur 1 und 2. Die Bezugszeichen zu Figur 3 sind somit lediglich im Zusammenhang mit Figur 3 zu verstehen:

In vielen technischen Anwendungsbereichen verlangt der Gesetzgeber, dass ein *Mensch* einen autonom ablaufenden Prozess überwachen und jederzeit in der Lage sein muss, in den Prozess einzugreifen. In einer solchen automatisierten technischen Anlage existieren zwei unabhängige Steuerungssysteme: auf der einen Seite das autonome technische Steuerungssystem mit seinen Sensoren und auf der anderen Seite der Mensch. Durch die parallele Kontrolle der Steuerungssysteme kann es zu unbeabsichtigten negativen emergenten Eigenschaften kommen. Die vorliegende Erfindung legt ein Verfahren offen, wie die Allokation der Kontrolle vorzunehmen ist, um diese negativen emergenten Eigenschaften zu verhindern. Das Verfahren wird am Beispiel der Steuerung eines autonomen Fahrzeugs genau erklärt.

Entsprechend Fig. 3 besteht das vorgeschlagene Steuerungssystem für eine autonome technische Anlage aus vier Blöcken. Auf der linken Seite der Fig. 3 ist das steuernde Computersystem CS dargestellt. Es beinhaltet Sensoren **110** und **120** und eine *Sensor Fusion Komponente SFK* **130**. In der Mitte ist eine, vorzugsweise intelligente, *Aktuatorsteuerung AST* **100** gezeigt. Die AST **100** gibt über eine Datenleitung **101** die Stellwerte an Aktuatoren **102** einer technischen Anlage vor. Auf der rechten Seite der Fig. 3 ist der *Human Operator* HO **160** mit einer Mensch-Maschine Interface Komponente *MMI* **150** dargestellt, und in der Figur über dem AST **100** ist eine *Monitorkomponente MK* **140** zu sehen.

Im Folgenden soll die Funktion dieses Steuerungssystems am Beispiel der Steuerung eines autonomen Fahrzeugs erklärt werden. Die Sensoren **110** und **120**, beispielsweise eine *Kamera* und ein *Lasersensor,* beobachten zyklisch die Umgebung des Fahrzeugs und senden die erfassten Daten über Datenleitungen **111** und **121** an die SFK **130**. Die Dauer eines typischen Zyklus beträgt beispielhaft *10* msec. Die SFK **130** erstellt auf der Basis der zyklisch erfassten Umgebungsdaten ein dreidimensionales Modell der Umgebung des Fahrzeugs, errechnet die Entfernung zu Hindernissen im Fahrweg, und falls sich die Hindernisse bewegen, deren Bewegungsrichtung und Geschwindigkeit. Nach einer Analyse dieses dreidimensionalen Modells werden von der SFK **130**, unter Berücksichtigung der Geschwindigkeit des eigenen Fahrzeugs, die Stellwerte für die AST **100** ermittelt und diese Stellwerte über eine Datenleitung **131** zyklisch an die AST **100** übergeben.

Im Rahmen der Analyse des Modells ermittelt die SFK **130** *kritische Orte* im dreidimensionalen Raum, die von besonderer Bedeutung für die zukünftige Bewegung des Fahrzeugs sind. Wenn sich z.B. ein Fußgänger Richtung Fahrbahn bewegt, ohne seine Geschwindigkeit zu reduzieren, so ist der voraussichtliche Ort des Betretens der Fahrbahn ein solcher *kritischer Ort.* Wir bezeichnen einen kritischen Ort einen *Point-of-Critical Action* (PCA). Die SFK ermittelt im dreidimensionalen Modell einen *Sichtvektor* zwischen den Augen des Fahrers und dem PCA und sendet die Parameter dieses Sichtvektors über Datenleitung **133** an die MK **140**.

Wenn der erkannte PCA im geplanten Fahrweg des Fahrzeugs liegt, so wird die SFK **130** eine Aktion (z.B.

Bremsvorgang) einleiten, um das Fahrzeug vor dem Fußgänger anzuhalten. Wir bezeichnen den spätesten Zeitpunkt, zu dem eine Aktion (z.B. Notbremsung) eingeleitet werden kann, um noch vor dem Hindernis anzuhalten, den *Last Instant of Action* (LIA).

Die folgende Tab. 1 gibt den Bremsweg und die Bremszeit eines PKWs unter normalen Straßenbedingungen an. Unter der *Anfangszeit (onset time)* wird jenes Zeitintervall verstanden, das vergeht zwischen dem *Auftreten eines Hindernisses* und dem *Beginn des Bremsens.* Während der *Anfangszeit* müssen folgende Aktionen stattfinden:

• Beobachtung des Szenarios

• Analyse des Szenarios

• Festlegung der notwendigen Aktion

• Beginn der Aktion.

Aus der Literatur [8] ist ein typischer Wert für die *Anfangszeit* des HO **160** *eine Sekunde,* während für das CS ein Wert von *100 msec* angenommen wird. Die *Anfangsentfernung* in Tab. 1 gibt die Länge des Weges an, die das Fahrzeug während der Anfangszeit zurücklegt. Der Bremsweg BW ist die Summe der Anfangsentfernung und der Entfernung, die notwendig ist, um das Fahrzeug nach Beginn der Bremsung anzuhalten. In der Tabelle bedeutet: AE = Anfangsentfernung; BW = Bremsweg; auto = automatisch. Es wird von folgenden Annahmen ausgegangen: Anfangszeit = manuell 1 sec, automatisch = 0.1 sec.

**Tab.1:** Bremsweg und Bremszeit [9]

| Speed km/h | AE in m manuell | AE in m auto | BW in m manuelll | BW in m auto | Bremszeit in s auto |
|---|---|---|---|---|---|
| 30 | 8.3 | .83 | 12.1 | 4.7 | 1.0 |
| 50 | 14 | 1.4 | 24.6 | 12 | 1.6 |
| 80 | 22.2 | 2.2 | 49.6 | 29.6 | 2.6 |
| 100 | 27.8 | 2.8 | 70.7 | 45.6 | 3.2 |
| 130 | 36.1 | 3.6 | 108.6 | 76 | 4.1 |
| 160 | 44.4 | 4.4 | 154 | 114 | 5 |

Die *verbleibende Reaktionszeit VRZ* ist das Zeitintervall zwischen der gegenwärtigen, aktuellen Zeit/Zeitpunkt *(jetzt)* und dem *LIA.* Die VRZ ist ein Maß für die Kritikalität des gegenwärtigen Scenarios. Die SFK bestimmt aus der VRZ unter Berücksichtigung der Geschwindigkeit des Fahrzeugs und der gegenwärtigen Fahrbedingungen einen *Kritikalitätsindex KI* des gegenwärtigen Szenarios. Der normierte KI liegt zwischen 0 und 1, wobei 0 die geringste Kritikalität und 1 die höchste Kritikalität darstellt.

Unter Bezugnahme auf Tab. 1 kann der KI beispielsweise wie folgt festgelegt werden:

➢ Wenn VRZ > 4* Bremszeit, dann ist KI=0,

➢ Wenn VRZ ≤ Bremszeit, dann ist KI=1, andernfalls

➢ KI = (1 - (VRZ - Bremszeit)/(3*Bremszeit))

Der KI wird von der SFK **130** zyklisch über die Datenleitung **131** an die AST **100** übergeben.

Der HO **160** in Fig.3 beobachtet mit seinen Augen die Umgebung des Fahrzeugs, analysiert das Szenario und gibt taktil seine Stellwerte an die MMI **150**. In einem Kraftfahrzeug besteht das MMI im Wesentlichen aus der Bremse, dem Lenkrad und dem Gaspedal. In [7] wird beispielsweise vorgeschlagen, einen Sensor in das Lenkrad einzubauen, der die Kraft misst, mit der der HO das Lenkrad hält. Die MMI übernimmt diese Stellwerte zyklisch und bildet einen Vektor *(current control vector* CCV), der die vom HO übernommen Stellwerte im gegenwärtigen und den kürzlich vergangenen Zyklen beinhaltet (bei den kürzlich vergangenen Zyklen handelt es sich beispielsweise um die letzten 10 Zyklen). Der CCV wird zyklisch an die AST **100** und an die MK **140** übergeben.

Die MK **140** erfasst zyklisch mittels einer Kamera die Visierlinie der Augen des HO **160** (Fahrer), um festzustellen, ob der HO **160** den Fahrweg und den von der SFK **130** empfangenen PCA beobachtet, und ermittelt einen *optischen*

*Aufmerksamkeitsindex OAI* im gegenwärtigen Zyklus. Der OAI hat den Wert 1, wenn die optische Aufmerksamkeit des HO **160** im gegenwärtigen Zyklus gegeben ist. Wenn der HO **160** nicht auf den Fahrweg schaut oder in einen Sekundenschlaf gefallen ist, so hat OAI den Wert 0, ansonsten einen Wert zwischen 1 und 0. In der Folge speichert die MK **140** den OAI in einem Vektor, um eine Zeitreihe der OAIs in den unmittelbaren vergangenen Zyklen, etwa innerhalb einer Sekunde (der *Anfangszeit* der Tab. 1) zu bilden, und errechnet aus dieser Zeitreihe, vorzugsweise mittels *exponential smoothing,* einen, vorzugsweise *geglätteten, optischen Aufmerksamkeitsindex* $OAI_{gegl}$, wobei die OAI Werte aus der jüngsten Vergangenheit (z.B. der letzten vergangenen 10 Zyklen) stärker gewichtet sind als die älteren Werte.

In gleicher Weise errechnet die MK **140** in jedem Zyklus aus dem von der **MMI 150** empfangenen CCV, vorzugsweise mittels *exponential smoothing,* einen, vorzugsweise geglätteten, *motorischen Aufmerksamkeitsindex* $MAI_{gegl}$.

Der *Engagement-Index EI* gibt an, in welchem Ausmaß der HO zum gegenwärtigen Zeitpunkt an der Steuerung des Fahrzeugs engagiert ist. EI ist eine Funktion von $OAI_{gegl}$ und $MAI_{gegl}$. Diese Funktion wird in den verschiedenen Verkehrssituationen (Stadtverkehr, Fahren auf der Autobahn) unterschiedlich sein. Eine mögliche Ausprägung dieser Funktion ist in Tab. 2 tabellarisch dargestellt.

**Tab. 2:** *Engagement-Index EI* als Funktion von $OAI_{gegl}$ und $MAI_{gegl}$

| $MAI_{gegl}$ / $OAI_{gegl}$ | 0.0 | 0.2 | 0.4 | 0.6 | 0.8 | 1.0 |
|---|---|---|---|---|---|---|
| 0.0 | 0.0 | 0.1 | 0.2 | 0.2 | 0.3 | 0.3 |
| 0.2 | 0.0 | 0.1 | 0.2 | 0.3 | 0.4 | 0.4 |
| 0.4 | 0.0 | 0.2 | 0.3 | 0.4 | 0.5 | 0.5 |
| 0.6 | 0.0 | 0.2 | 0.3 | 0.5 | 0.6 | 0.7 |
| 0.8 | 0.0 | 0.2 | 0.4 | 0.5 | 0.7 | 0.9 |
| 1.0 | 0.0 | 0.2 | 0.4 | 0.6 | 0.8 | 1.0 |

Der EI ist eine normierte Größe mit Werten zwischen 0 und 1, wobei 0 bedeutet, dass der HO **160** *nicht engagiert* ist und 1 bedeutet, dass der HO **160** *voll engagiert* ist. Die zweite Spalte in Tab.2 ($MAI_{gegl}$ = 0.0) behandelt den Fall dass der HO **160** das Geschehen mit weniger oder mehr Aufmerksamkeit verfolgt, jedoch nicht in das Geschehen eingreift. Die MK **140** übermittelt den EI zyklisch über die Datenleitung **141** an die AST **100**.

Die AST **100** bekommt in jedem Zyklus einen Satz von Stellwerten für die Aktuatoren und den KI des gegenwärtigen Szenarios von der SFK **130**, einen weiteren Satz von Stellwerten für die Aktuatoren von der MMI **150**, sowie den aktuellen EI des HO **160** von der MK **140**.

Zuerst muss die AST entscheiden, wer im gegenwärtigen Zyklus die Kontrolle über die Aktuatoren ausübt, die SFK **130** oder der HO **160** (über die MMI **150**). Wenn EI > KI, dann bekommt der HO **160** die Kontrolle und die AST übernimmt die Stellwerte von der MMI **150**. Wenn EI > $EI_{grenz}$ und der HO **160** hat die Kontrolle im vergangenen Zyklus ausgeübt, dann behält der HO **160** auch die Kontrolle im gegenwärtigen Zyklus. $EI_{grenz}$ ist ein Parameter, der eingeführt wird, um eine Oszillation der Kontrolle zwischen dem HO **160** und der SFK **130** zu verhindern, wenn eine Episode mit einem hohen Engagement des HO **160** abläuft. Wenn EI $\leq EI_{grenz}$ und KI $\geq$ EI, dann bekommt die SFK **130** die Kontrolle. In der Folge übergibt die AST **100** die ausgewählten Stellwerte an die Aktuatoren **102**.

Ein beispielhafter Wert für $EI_{grenz}$ ist 0,7.

Durch eine klare Allokation der Kontrolle kann in einem SoS das Auftreten von *zufälligen negativen emergenten* Eigenschaften verhindert und die Sicherheit des Systems erhöht werden. Die vorliegende Erfindung ist daher von großer wirtschaftlicher und gesellschaftlicher Bedeutung.

Das beschriebene Verfahren zur Allokation der Kontrolle in einem SoS kann nicht nur auf autonome Fahrzeuge, sondern auch auf eine Vielzahl von anderen autonomen Vorrichtungen, z.B. der Steuerung von Robotern, angewandt werden.

In [3] ist ein Verfahren offengelegt, wie die von zwei Sensorfusionskomponenten ermittelten Stellwerte fusioniert werden können, im Falle, dass ein Softwarefehler auftritt. Dieses in [3] beschriebene Verfahren wird hier im Folgenden an Hand von Figur 4 erörtert. Es wird angemerkt, dass die im Folgenden zu Figur 4 verwendeten Bezugszeichen teilweise identisch zu jenen aus Figuren 1 bis 3 sind, diese aber nicht unbedingt dieselben Elemente bezeichnen wie jene in Figuren 1 bis 3. Die Bezugszeichen zu Figur 4 sind somit lediglich im Zusammenhang mit Figur 4 zu verstehen:

EP 2 974 156 B1

Das folgende konkrete Beispiel beschreibt dieses Verfahren an Hand eines autonomen Bremssystems in einem Fahrzeug.

Im Juni 2012 hat die NCAP *(European New Car Assessment Program)* Organisation eine Roadmap [4] veröffentlicht, aus der hervorgeht, dass im Jahr 2016 *Autonomous Emergency Braking* (AEB) Systeme in neuen Kraftfahrzeugen auf breiter Front eingeführt werden sollen. Um die Zuverlässigkeit und Sicherheit von autonomen Bremssystemen verbessern, ist vorgesehen, die die Umgebung des Fahrzeugs beobachtenden Sensoren und die zur Auswertung erforderliche Elektronik auf zwei *autarke Fault-Containment Units (FCU)* aufzuteilen [2] und die von den beiden unabhängigen FCUs ermittelten Stellwerte derart zu fusionieren, dass das Fahrzeug auch bei Auftreten eines Fehlers in einer FCU schnell in einen sicheren Zustand gebracht werden kann. Unter einer *FCU* wird ein abgekapseltes Sensor/Hardware/Software Subsystem verstanden, wobei die unmittelbaren Auswirkungen eines Fehlers dieses Subsystems (gleichgültig ob es sich um einen Hardware oder Software oder Sensorfehler handelt) auf dieses Subsystem eingegrenzt sind [6, S.136]. Eine FCU ist *autark,* wenn diese FCU in der Lage ist, die geforderte Funktionalität ohne Bezugnahme auf eine weitere FCU zu erbringen. Erfindungsgemäß besteht ein AEB System aus den zwei FCUs **110** und **120**. Die FCU **110** verfügt über Sensoren (z.B. Kamera, Radar) **111** und **112** zur Beobachtung der Umgebung des Fahrzeugs. Die FCU **120** verfügt über Sensoren **121** und **122**. Die Sensoren **111,112,121** und **122** werden zyklisch ausgelesen, wobei die Dauer eines Zyklus typischerweise 10 msec beträgt. In der FCU **110** übernimmt die Sensor Fusion Komponente **113** die Sensordaten und errechnet einen Stellwert für die Bremsaktuatoren, wobei der Stellwert 0 bedeutet, *nicht zu bremsen,* und der Stellwert *1* bedeutet, die *maximale Bremskraft zu aktivieren.* Analog berechnet die Sensor Fusion Komponente **123** den Stellwert der FCU **120**. Die beiden Stellwerte werden über die Datenleitungen **114** und **124** an die *intelligente Aktuatorsteuerung (AST)* **100** zur Steuerung der Bremsen ausgegeben. Die AST **100** kann auf einer selfchecking Hardware exekutiert werden, um einen Hardwarefehler der AST **100** sofort erkennen zu können. Es wird angenommen, dass die relativ einfache Software der AST **100** frei von Entwurfsfehlern ist.

Im fehlerfreien Fall sind die beiden Stellwerte der FCUs **110** und **120** identisch und es ist daher unwesentlich, welcher der beiden Stellwerte von der AST **100** übernommen wird.

Im Fehlerfall werden die beiden Stellwerte der FCUs **110** und **120** unterschiedlich sein. Im Extremfall ermittelt in einem Zyklus FCU **110** den Wert *1* (*Vollbremsung*) und FCU **120** den Wert *0* (*nicht bremsen*). Da angenommen wird, dass nur eine FCU fehlerhaft ist, ist einer dieser beiden Werte richtig, der andere falsch. Es ist *nicht bekannt,* welcher Wert richtig und welcher Wert falsch ist. Wenn der richtige Wert *0* (nicht bremsen) ist, dann kann die Wahl des falschen Wertes *1-nicht notwendige spontane Vollbremsung-* zu einem Auffahrunfall durch das folgende Fahrzeug führen. Wenn hingegen der richtige Wert 1 (Vollbremsung) ist, dann führt die Wahl des falschen Wertes 0 wahrscheinlich zu einem Unfall. Um das Risiko einer falschen Wahl zu begrenzen, wird vorgeschlagen, im *Fehlerfall* (ungleiche Stellwerte der beiden FCUs) durch einen gewichteten Mittelwertalgorithmus einen Stellwert zu errechnen, der aus Sicherheitsüberlegungen die Alternative *bremsen* stärker gewichtet als die Alternative *nicht bremsen.*

Weiter wird vorgeschlagen, dass im Fehlerfall (ungleiche Stellwerte) die intelligente AST eine Fehlermeldung im Diagnosespeicher des Fahrzeugs ablegt.

Erfindungsgemäß ermittelt die AST **100** aus den beiden Stellwerten der FCUs **110** und **120** durch Anwendung der folgenden Formel den Stellwert $B_i$ des gegenwärtigen Zyklus $i$

$$B_i = (g * B_{gross} + B_{klein})/(g+1)$$

wobei $B_{gross}$ der *größere* der beiden Stellwerte und $B_{klein}$ der *kleinere* der beiden Stellwerte der FCUs **110** und **120** ist. Die Variable g gibt an, mit welchem Gewicht der größere Stellwerte *(stärker bremsen)* zu berücksichtigen ist im Vergleich zum kleineren Stellwert *(weniger stark bremsen)*.

Im folgenden Beispiel wird $g = 3$ angenommen, d.h. in dem gewichteten Mittelwertalgorithmus hat der größere Stellwert ein dreimal so großes Gewicht wie der kleinere Stellwert. Durch die stärkere Gewichtung des größeren Stellwerts wird erreicht, dass das Fahrzeug im Fehlerfall *schnell* in einen sicheren Zustand (beispielsweise in einen abbremsenden oder abgebremsten Zustand oder Stillstand) geführt wird.

**Tab.1:** Stellwert als Funktion von $B_{gross}$ und $B_{klein}$; g=3

| $B_{klein}$ / $B_{gross}$ | 1.0 | 0.8 | 0.6 | 0.4 | 0.2 | 0.0 |
|---|---|---|---|---|---|---|
| 1.0 | **1** | 0.95 | 0.9 | 0.85 | 0.80 | 0.75 |
| 0.8 | - | **0.8** | 0.75 | 0.70 | 0.65 | 0.60 |

(fortgesetzt)

| $B_{klein}$ / $B_{gross}$ | 1.0 | 0.8 | 0.6 | 0.4 | 0.2 | 0.0 |
|---|---|---|---|---|---|---|
| 0.6 | - | - | **0.6** | 0.55 | 0.50 | 0.45 |
| 0.4 | - | - | - | **0.4** | 0.35 | 0.3 |
| 0.2 | - | - | - | - | **0.2** | 0.15 |
| 0.0 | - | - | - | - | - | **0.0** |

Das Beispiel mit der Gewichtung $g = 3$ zeigt, dass im betrachteten Extremfall, d.h. eine FCU verlangt *Vollbremsung*, die andere *nicht bremsen*, eine Bremskraft von 75% zur Anwendung gebracht wird. Aus der Tabelle 1 ist auch ersichtlich, dass im fehlerfreien Fall (Diagonale in Tab.1) keine Modifikation des Stellwerts erfolgt.

Zum Unterschied von Systemen der Analogtechnik sind in digitalen Systemen die Auswirkungen eines Fehlers auf das Resultat unvorhersehbar. Um eine extreme, durch einen Fehler hervorgerufene spontane Reaktion des PS (im obigen Beispiel das Kraftfahrzeug) weiter abzufedern, kann der Stellwert $Bi$ im Zyklus $i$ beim plötzlichen Auftreten einer großen Differenz der errechneten Stellwerten der beiden FCUs durch eine gewichtete Mittelwertbildung aus dem gegenwärtigen Stellwert und dem Stellwert des unmittelbar vorgelagerten Zyklus i-1 weiter korrigiert werden. Dazu wird vorgeschlagen, dass die AST **100** einen korrigierten Stellwert $B_{ikor}$ wie folgt berechnet:

$$B_{ikor} = (B_i + B_{i-1} * (B_{groß} - B_{klein})) / (1 + B_{groß} - B_{klein})$$

Wenn $(B_{groß} - B_{klein}) = 0$ (gleiche Stellwerte), dann *ist $B_{ikor} = B_i$.*, d.h. es erfolgt keine Korrektur. Wenn hingegen $(B_{groß} - B_{klein}) = 1$ (*Extremfall*) dann ist $B_{ikor} = (Bi + B_{i-1})/2$, *d.h. $B_{ikor}$* nimmt den Mittelwert der beiden letzten Zyklen an. Für alle anderen Werte *von* $(B_{groß} - B_{klein})$ liegt der Wert $B_{ikor}$ zwischen diesen beiden Grenzen. Diese Berechnung des korrigierten Stellwertes $B_{ikor}$ führt zur Abfederung einer spontanen Reaktion, die durch einen Fehler hervorgerufen wurde.

Das vorgeschlagene Verfahren kann in redundanten Systemen mit verhältnismäßig geringem Aufwand realisiert werden und führt zu einer signifikanten Erhöhung der Zuverlässigkeit und Sicherheit von autonomen Steuerungssystemen.

Zitierte Literatur:

[1] US 7,839,868. Kopetz, H. Communication method and system for the transmission of timedriven and event-driven Ethernet messages. Granted November 23, 2010.

[2] Österreichische Patentanmeldung A 201/2013 der Fa. FTS Computertechnik. *Verfahren zur Allokation der Kontrolle in einem System-of-Systems*. Eingereicht am 14.3. 2013.

[3] Österreichische Patentanmeldung A 198/2013 der Fa. FTS Computertechnik. *Verfahren zur Risikobegrenzung von Fehlern in einem sicherheitsrelevanten Steuerungssystem.* Eingereicht am 14.3. 2013.

[4] NCAP Rating Group. *EURO NCAP Rating Review 2012.* Online at: http://www.euroncap.com/

[5] Özgüner, Ü., et al. System for Safety and Autonomous Behavior in Cars: The DARPA Grand Challenge Experience. Proc. of the IEEE. Vol 95.No. 2. Pp.397-412. 2007.

[6] Kopetz, H., Real-time Systems-Design Principles for Distributed Embedded Applications. Springer Verlag, 2011.

[7] US Patent Application 200432334. Kind, C. *Doze-off early Warning System for Automotive and other Applications.* US Patent Application 200432334. Feb. 19, 2004.

[8] Strayer, D.L. et al. Profiles in Driver Distraction: Effects of Cell Phone Conversations on Younger and Older Drivers. Human Factors. Vol. 46. No. 4, pp. 640-649. 2004

[9] Autokiste., Brake distance calculator, accessed on Jan 13, 2013 at URL: http://www.autokiste.de/service/anhalteweg/index.htm

**Patentansprüche**

1. Vorrichtung zur Steuerung der Bremsen und/oder Lenkung und/oder Beschleunigung in einem Kraftfahrzeug, wobei die Vorrichtung eine Anzahl von unterschiedlichen Sensorkomponenten (111, 112, 113), eine Menschmaschine-Interface-Komponente (130) und eine Aktuatoren-Steuerungs-Komponente (150) umfasst, und wobei jede dieser Komponenten eine *Fault-Containment Unit* darstellt und über ein TTEthernet Kommunikationsinterface verfügt, **dadurch gekennzeichnet, dass** die Vorrichtung weiters zwei *diversitäre* Sensorfusionskomponenten (121,122) sowie eine Monitorkomponente (140) zur Beobachtung eines Fahrers des Kraftfahrzeuges umfasst, wobei jede dieser Sensorfusionskomponenten (121, 122) ebenfalls eine *Fault-Containment Unit* darstellt und über ein TTEthernet Kommunikationsinterface verfügt, und wobei alle Komponenten an eine *zentrale TTEthernet-Nachrichtenverteilereinheit* (100) angeschlossen sind, und wobei die Komponenten *ausschließlich* unter Verwendung von *standardisierten Ethernet Nachrichten* miteinander kommunizieren.

2. Vorrichtung nach Anspruch 1, **dadurch gekennzeichnet, dass** alle Komponenten (111, 112, 113, 130, 150, 121, 122, 100) auf einer Platine angeordnet und die Datenleitungen (101) zwischen den Komponenten und der *zentralen Nachrichtenverteilereinheit (100)* als Leiterbahnen auf der Platine ausgeführt sind.

3. Vorrichtung nach Anspruch 1, **dadurch gekennzeichnet, dass** alle Komponenten (130, 150, 121, 122, 100), mit Ausnahme der Sensorkomponenten, auf einer Platine angeordnet und die Datenleitungen (101) zwischen den Komponenten, insbesondere den Komponenten auf der Platine und der *zentralen Nachrichtenverteilereinheit* (100) als Leiterbahnen ausgeführt sind.

4. Vorrichtung nach einem der Ansprüche 1 bis 3, **dadurch gekennzeichnet, dass** die zentrale Nachrichtenverteilereinheit (100) und alle Datenleitungen zur zentralen Nachrichtenverteilereinheit *redundant* ausgelegt sind.

5. Vorrichtung nach einem der Ansprüche 1 bis 3, **dadurch gekennzeichnet, dass** die Menschmaschine-Interface-Komponente (130) und die Aktuatoren-Steuerungs-Komponente (150) sowie die Datenleitung (151) zwischen der Aktuatoren-Steuerungs-Komponente und den Aktuatoren redundant ausgelegt sind.

6. Vorrichtung nach einem der Ansprüche 1 bis 5, **dadurch gekennzeichnet, dass** die Vorrichtung über zwei unabhängige Stromquellen verfügt, wobei jeweils eine erste von zwei redundanten Komponenten von der ersten Stromquelle versorgt wird und jeweils die zweite Komponente der beiden redundanten Komponenten von der zweiten Stromquelle versorgt wird.

7. Vorrichtung nach einem der Ansprüche 1 bis 6, **dadurch gekennzeichnet, dass** die beiden Sensorfusionskomponenten (121, 122) diversitär redundant ausgeführt sind.

8. Vorrichtung nach einem der Ansprüche 1 bis 7, **dadurch gekennzeichnet, dass** die Sensorkomponenten (111, 112, 113), die beiden diversitären Sensorfusionskomponenten (121, 122), die Monitorkomponente (140), die Mensch-Maschine-Interface Komponente (130) und die Aktuatoren-Steuerungs-Komponente (150) ausschließlich mittels *standardisierter TTEthernet Nachrichten* über eine *Nachrichtenverteilereinheit* (100) kommunizieren, wobei die *Nachrichtenverteilereinheit* (100) dazu eingerichtet ist, eine Teilmenge dieser TTEthernet Nachrichten zu kopieren und an eine Diagnoseeinheit (190) zu senden, und wobei die Diagnoseeinheit (190) dazu eingerichtet ist, diese kopierten Nachrichten zu analysieren und zu speichern.

9. Vorrichtung nach einem der Ansprüche 1 bis 8, **dadurch gekennzeichnet, dass** an die *TTEthernet-Nachrichtenverteilereinheit* (100) eine *Diagnoseeinheit* (190) zur *zeitrichtigen* Beobachtung der vermittelten Nachrichten angeschlossen ist.

10. Verfahren zur Steuerung der Bremsen und/oder Lenkung und/oder Beschleunigung in einem Kraftfahrzeug mit einer Vorrichtung nach einem der Ansprüche 1 bis 9, **dadurch gekennzeichnet, dass** eine Anzahl von Sensorkomponenten (111,112,113), zwei diversitäre Sensorfusionskomponenten (121, 122), eine Monitorkomponente (140) zur Beobachtung eines Fahrers des Kraftfahrzeuges, eine Mensch-Maschine Interface Komponente (130) und eine Aktuatoren-Steuerungs-Komponente (150) ausschließlich mittels *standardisierter TTEthernet Nachrichten über eine*

*Nachrichtenverteilereinheit* (100) kommunizieren.

11. Verfahren nach Anspruch 10, **dadurch gekennzeichnet, dass** die *Nachrichtenverteilereinheit* (100) eine Teilmenge dieser TTEthernet Nachrichten kopiert und an eine Diagnoseeinheit sendet, und wobei die Diagnoseeinheit diese kopierten Nachrichten analysiert und speichert.

12. Verfahren nach Anspruch 10 oder 11, **dadurch gekennzeichnet, dass** die Diagnoseeinheit Nachrichten produziert, die das Verhalten jeder Sensorkomponente (111, 112, 113), jeder der beiden diversitären Sensorfusionskomponenten (121, 122), der Monitorkomponente (140) und der Mensch-Maschine Interface Komponente (130) im Werte- und Zeitbereich simulieren.

**Claims**

1. A device for controlling the braking and/or steering and/or acceleration in a motor vehicle, wherein the device has a number of different sensor components (111, 112, 113), a man/machine interface component (130) and an actuator controller component (150), and wherein each of these components constitutes a *fault-containment unit* and has a TTEthernet communications interface, **characterised in that** the device also has two *diverse* sensor fusion components (121, 122) and comprises a monitor component (140) for monitoring a driver of the motor vehicle, wherein each of these sensor fusion components (121, 122) likewise constitutes a *fault-containment unit* and has a TTEthernet communications interface, and wherein all components are connected to a *central TTEthernet message distribution unit* (100), and wherein the components communicate with one another *exclusively* with use of *standardised Ethernet messages*.

2. The device according to Claim 1, **characterised in that** all components (111, 112, 113, 130, 150, 121, 122, 100) are arranged on a circuit board and the data lines (101) between the components and the *central message distribution unit (100)* are formed as conductive tracks on the printed circuit board.

3. The device according to Claim 1, **characterised in that** all components (130,150,121,122, 100), with the exception of the sensor components, are arranged on a circuit board, and the data lines (101) between the components, in particular the components on the circuit board and the *central message distribution unit (100)*, are formed as conductive tracks.

4. The device according to one of Claims 1 to 3, **characterised in that** the central message distribution unit (100) and all data lines to the central message distribution unit are designed *redundantly.*

5. The device according to one of Claims 1 to 3, **characterised in that** the man/machine interface component (130) and the actuator controller component (150) and also the data line (151) between the actuator controller component and the actuators are designed redundantly.

6. The device according to one of Claims 1 to 5, **characterised in that** the device has two independent power sources, wherein in each case a first of two redundant components is supplied by the first power source and in each case the second component of the two redundant components is supplied by the second power source.

7. The device according to one of Claims 1 to 6, **characterised in that** the two redundant sensor fusion components (121, 122) are formed in a diverse manner.

8. The device according to one of Claims 1 to 7, **characterised in that** the sensor components (111, 112, 113), the two diverse sensor fusion components (121, 122), the monitor component (140), the man/machine interface component (130), and the actuator controller component (150) communicate exclusively by means of *standardised TTEthernet messages* via a *message distribution unit* (100), wherein the *message distribution unit* (100) is designed to copy a subset of these TTEthernet messages and to send them to a diagnosis unit (190), and wherein the diagnosis unit (190) is designed to analyse and to store these copied messages.

9. The device according to one of Claims 1 to 8, **characterised in that** a *diagnosis unit* (190) for *time-correct* monitoring of the exchanged messages is connected to the *TTEthernet message distribution unit* (100).

10. A method for controlling the braking and/or steering and/or acceleration in a motor vehicle using a device according to one of Claims 1 to 9, **characterised in that** a number of sensor components (111, 112, 113), two diverse sensor fusion components (121,122), a monitor component (140) for monitoring a driver of the motor vehicle, a man/machine interface component (130), and an actuator controller component communicate (150) exclusively by means of *standardised TTEthernet messages via a message distribution unit* (100).

11. The method according to Claim 10, **characterised in that** the *message distribution unit* (100) copies a subset of these *TTEthernet* messages and sends them to a diagnosis unit, and wherein the diagnosis unit analyses and stores these copied messages.

12. The method according to Claim 10 or 11, **characterised in that** the diagnosis unit produces messages that simulate the behaviour of each sensor component (111, 112, 113), of each of the two diverse sensor fusion components (121, 122), of the monitor component (140) and of the man/machine interface component (130) in the value and time domain.

## Revendications

1. Contrôleur du freinage et/ou de la direction et/ou de l'accélération dans un véhicule à moteur, le contrôleur comportant une pluralité de différents composants de capteur (111, 112, 113), un composant d'interface homme/machine (130) et un composant de contrôleur d'actionneurs (150), et chacun de ces composants constituant une unité *de maîtrise de défauts* et ayant une interface de communication TTEthernet, **caractérisé par le fait que** le contrôleur comporte en outre deux composants de fusion de capteurs *divers* (121, 122) ainsi qu'un composant de surveillance (140) pour la surveillance d'un conducteur du véhicule à moteur, chacun de ces composants de fusion de capteurs (121, 122) constituant également une *unité de maîtrise de défauts* et ayant une interface de communication TTEthernet, et tous les composants étant connectés à une *unité centrale de distribution de messages TTEthernet* (100), et les composants communiquant les uns avec les autres *exclusivement* par utilisation de *messages Ethernet normalisés.*

2. Contrôleur selon la revendication 1, **caractérisé par le fait que** tous les composants (111, 112, 113, 130, 150, 121, 122, 100) sont agencés sur une carte de circuit imprimé et les lignes de données (101) entre les composants et l'*unité centrale de distribution de messages (100)* sont formées en tant que pistes conductrices sur la carte de circuit imprimé.

3. Contrôleur selon la revendication 1, **caractérisé par le fait que** tous les composants (130, 150, 121, 122, 100), à l'exception des composants de capteur, sont agencés sur une carte de circuit imprimé et les lignes de données (101) entre les composants, en particulier les composants sur la carte de circuit imprimé et l'unité *centrale de distribution de messages (100)* sont formées en tant que pistes conductrices.

4. Contrôleur selon l'une des revendications 1 à 3, **caractérisé par le fait que** l'unité centrale de distribution de messages (100) et toutes les lignes de données vers l'unité centrale de distribution de messages sont conçues de *façon redondante.*

5. Contrôleur selon l'une des revendications 1 à 3, **caractérisé par le fait que** le composant d'interface homme-machine (130) et le composant de contrôleur d'actionneurs (150) ainsi que la ligne de données (151) entre le composant de contrôleur d'actionneurs et les actionneurs sont conçus de façon redondante.

6. Contrôleur selon l'une des revendications 1 à 5, **caractérisé par le fait que** le dispositif a deux sources d'alimentation indépendantes, où dans chaque cas un premier de deux composants redondants est alimenté par la première source d'alimentation et dans chaque cas le second composant des deux composants redondants est alimenté par la seconde source d'alimentation.

7. Contrôleur selon l'une des revendications 1 à 6, **caractérisé par le fait que** les deux composants redondants de fusion de capteurs (121, 122) sont formés de façon diverse.

8. Contrôleur selon l'une des revendications 1 à 7, **caractérisé par le fait que** les composants de capteur (111, 112, 113), les deux composants de fusion de capteurs divers (121, 122), le composant de surveillance (140), le composant d'interface homme-machine (130) et le composant de contrôleur d'actionneurs (150) communiquent exclusivement au moyen de *messages TTEthernet normalisés* par l'intermédiaire d'une *unité de distribution de messages* (100), *l'unité de distribution de messages* (100) étant conçue pour copier un sous-ensemble de ces messages TTEthernet et pour les envoyer à une unité de diagnostic (190), et l'unité de diagnostic (190) étant conçue pour analyser et mémoriser ces messages copiés.

9.  Contrôleur selon l'une des revendications 1 à 8, **caractérisé par le fait qu'**une *unité de diagnostic* (190) pour la surveillance *temporelle précise* des messages transmis est connectée à l'*unité de distribution de messages TTEthernet* (100).

10. Procédé pour la commande du freinage et/ou de la direction et/ou de l'accélération dans un véhicule à moteur à l'aide d'un contrôleur selon l'une des revendications 1 à 9, **caractérisé par le fait qu'**une pluralité de composants de capteur (111, 112, 113), deux composants de fusion de capteurs divers (121, 122), un composant de surveillance (140) pour la surveillance d'un conducteur du véhicule à moteur, un composant d'interface homme-machine (130) et un composant de contrôleur d'actionneurs (150) communiquent exclusivement au moyen de *messages TTEthernet normalisés par l'intermédiaire d'une unité de distribution de messages* (100).

11. Procédé selon la revendication 10, **caractérisé par le fait que** *l'unité de distribution de messages* (100) copie un sous-ensemble de ces messages TTEthernet et les envoie à une unité de diagnostic, et où l'unité de diagnostic analyse et mémorise ces messages copiés.

12. Procédé selon l'une des revendications 10 ou 11, **caractérisé par le fait que** l'unité de diagnostic produit des messages, qui simulent le comportement de chaque composant de capteur (111, 112, 113), de chacun des deux composants de fusion de capteurs divers (121, 122), du composant de surveillance (140) et du composant d'interface homme-machine (130) dans la plage de valeurs et de temps.

**FIG. 1**

**FIG. 2**

**FIG. 3**

**FIG. 4**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7839868 B
- AT 2012013 A
- AT 1982013 A
- US 200432334 B


**In der Beschreibung aufgeführte Nicht-Patentliteratur**

- **KOPETZ, H.** Communication method and system for the transmission of timedriven and event-driven Ethernet messages. *Granted,* 23. November 2010
- **ÖZGÜNER, Ü. et al.** System for Safety and Autonomous Behavior in Cars: The DARPA Grand Challenge Experience. *Proc. of the IEEE.,* 2007, vol. 95 (2), 397-412
- **KOPETZ, H.** Real-time Systems-Design Principles for Distributed Embedded Applications. Springer Verlag, 2011
- **STRAYER, D.L. et al.** Profiles in Driver Distraction: Effects of Cell Phone Conversations on Younger and Older Drivers. *Human Factors,* 2004, vol. 46 (4), 640-649
- **AUTOKISTE.** *Brake distance calculator,* 13. Januar 2013, http://www.autokiste.de/service/anhalteweg/index.htm